# EUROPÄISCHE PATENTSCHRIFT

(11) **EP 0 544 930 B1**
(45) Veröffentlichungstag und Bekanntmachung des Hinweises auf die Patenterteilung: **08.10.1997**
(21) Anmeldenummer: 91120523.5
(22) Anmeldetag: 29.11.1991
(51) Int. Cl.: G06F 11/00, H04M 3/24

(54) **Verfahren zum Lokalisieren von Programmpfaden in vermittlungstechnischen Programmen**
Method of tracing program paths in communication exchange programs
Moyen de tracer des chemins de logiciels dans des logiciels de centraux de commutation de communication.

(43) Veröffentlichungstag der Anmeldung: 09.06.1993
(73) Patentinhaber: SIEMENS AKTIENGESELLSCHAFT, 80333 München (DE)
(72) Erfinder: Köninger, Reinhard, W-4650 Gelsenkirchen (DE); Gericke, Harald, W-4200 Oberhausen (DE)

(56) Entgegenhaltungen:
- DE-A- 3 432 024
- US-A- 5 050 168
- SIEMENS TELCOM REPORT Bd. 11, Nr. 4, MÜNCHEN DE Seiten 133 - 135; W. BECKER: 'Teststrategie für ESWD-Software sichert Systemqualität'
- IBM TECHNICAL DISCLOSURE BULLETIN. Bd. 33, Nr. 8, NEW YORK US Seiten 310 - 314; AUTOR UNBEKANNT: 'CODE COVERAGE MEASUREMENT'
- IBM TECHNICAL DISCLOSURE BULLETIN. Bd. 32, Nr. 10A, NEW YORK US Seiten 293 - 296; AUTOR UNBEKANNT: 'SUBROUTINE FOOTPRINTING MECHANISM'

## Beschreibung

In Kommunikationssystemen, z. B. einer Fernmeldevermittlungsanlage, sind für die Steuerung der vermittlungstechnischen Vorgänge überwiegend zustands- bzw. anreizverarbeitungsorientierte vermittlungstechnische Programme vorgesehen. Diese vermittlungstechnischen Programme realisieren meist in CCITT-Empfehlungen standardisierte vermittlungstechnische Abläufe, z. B. den in der CCITT-Empfehlung Q.931 angegebenen grundsätzlichen Verbindungsaufbauablauf für Durchschaltenetze. Die vermittlungstechnische Steuerung des Kommunikationssystems wird dadurch bewirkt, daß nach Auftreten eines Ereignisses bzw. eines Anreizes, das bzw. der durch einen Teilnehmer oder auch durch das Kommunikationssystem veranlaßt wird, der Ablauf zumindest eines vorgegebenen vermittlungstechnischen Teilprogramms eingeleitet wird und das Kommunikationssystem in einen weiteren vermittlungstechnischen Zustand gesteuert wird. Die vermittlungstechnischen Programme bzw. Teilprogramme derartiger Kommunikationssysteme weisen hierzu ein oder mehrere Programmpfade auf, wobei ein Programmpfad durch ein Programm bzw. Teilprogramm realisiert ist. Ein Kommunikationssystem, bei dem die vermittlungstechnischen Vorgänge durch zustands-/anreizverarbeitungsorientierte vermittlungstechnische Programme realisiert werden, ist aus der Druckschrift "ISDN im Büro - HICOM", insbesondere Seite 69, bekannt.

Des weiteren ist allgemein und beispielsweise aus der Druckschrift "Duden, Informatik", Seite 7/8, sowie Seite 167/168, bekannt, für die Fehlerverfolgung und Fehlererkennung sowie für die Diagnose in Programmen, d. h. auch in vermittlungstechnischen Programmen, spezielle Testprogramme bzw. Dienstprogramme, z. B. "Debugging-Programme" oder "Trace-Programme", einzusetzen. Mit Hilfe dieser Testprogramme wird der zu testende Programmablauf Schritt für Schritt ausgeführt. Der Programmablauf kann, insbesondere bei der Fehlerverfolgung und Fehlerlokalisierung, an vorgegebenen Haltepunkten unterbrochen und die in einem Protokollspeicher hinterlegten Fehlkennungen und Fehlernummern, z. B. Inhalte von Variablen und Registern, protokolliert werden. Die Lokalisierung der Fehler wird durch eine Auswertung der protokollierten Fehlernummern und Fehlkennungen, die bei Auftreten eines Fehlers gebildet und protokolliert werden, entweder durch einen Programmierer oder durch entsprechende Diagnoseprogramme durchgeführt. Bei der Verwendung von Fehlernummern und Fehlkennungen in mittleren und größeren Kommunikationssystemen kann bei Auftreten gleicher Fehler und damit gleicher Fehlernummern und Fehlkennungen keine eindeutige Zuordnung des Programmpfades, in dem der Fehler aufgetreten ist, zum Fehler, der protokolliert wurde, erreicht werden. Die Zuordnung der protokollierten Fehlerinformation zum Programmpfad stellt bei der Lokalisierung und Beseitigung von Fehlern in zustands/anreizverarbeitungsorientierten vermittlungstechnischen Programmen jedoch eine wesentliche Grundlage für die Fehleranalyse und Fehlerbeseitigung dar.

Die der Erfindung zugrundeliegende Aufgabe ist darin zu sehen, eine eindeutige Zuordnung des protokollierten Fehlers zu dem Programmpfad, in dem der protokollierte Fehler auftritt, beim Testen von zustands/anreizverarbeitungsorientierten vermittlungstechnischen Programmen zu erreichen. Die Aufgabe wird ausgehend von den Merkmalen gemäß Oberbegriff des Anspruchs 1 durch dessen kennzeichnende Merkmale gelöst.

Der wesentliche Aspekt des erfindungsgemäßen Verfahrens ist darin zu sehen, daß in jedem Programmpfad ein Haltepunkt vorgesehen ist und daß jedem Haltepunkt eine programmpfadindividuelle Information zugeordnet wird. Während des Tests des vermittlungstechnischen Programms oder Teilen dieses Programms wird an den Haltepunkten das zu testende Programm zumindest temporär angehalten und die zusammen mit Fehlerinformationen in einem Protokollspeicher hinterlegten programmpfadindividuellen Informationen protokolliert.

Ein wesentlicher Vorteil des erfindungsgemäßen Verfahrens ist neben der programmpfadeindeutigen Zuordnung der protokollierten Fehlerinformationen darin zu sehen, daß durch die zusätzlichen Haltepunkte in jedem Programmpfad aufgrund der zusätzlich an diesen Haltepunkten protokollierten Haltepunktinformationen die anschließende Fehlerlokalisierung und Fehlerdiagnose erheblich erleichtert wird.

Besonders vorteilhaft ist eine Realisierung des erfindungsgemäßen Verfahrens in zentralen vermittlungstechnischen Programmen - siehe Anspruch 2, da die sehr umfangreichen zentralen vermittlungstechnischen Programme üblicherweise eine Vielzahl von Teilprogrammen aufweisen und durch die zusätzliche, an den Haltepunkten protokollierten Haltepunktinformationen die Fehlerlokalisierung bzw. Fehlerdiagnose wesentlich verbessert wird. Die programmpfadindividuellen Haltepunktinformationen können jeweils durch eine numerische - beispielsweise zur allgemeinen Bestimmung von Programmpfaden - oder, um beispielsweise übergeordnete vermittlungstechnische Programmpfade anzugeben, durch eine alphanumerische Information gebildet sein.

Im folgenden wird das erfindungsgemäße Verfahren anhand eines figürlich dargestellten Ausführungsbeispiels erläutert.

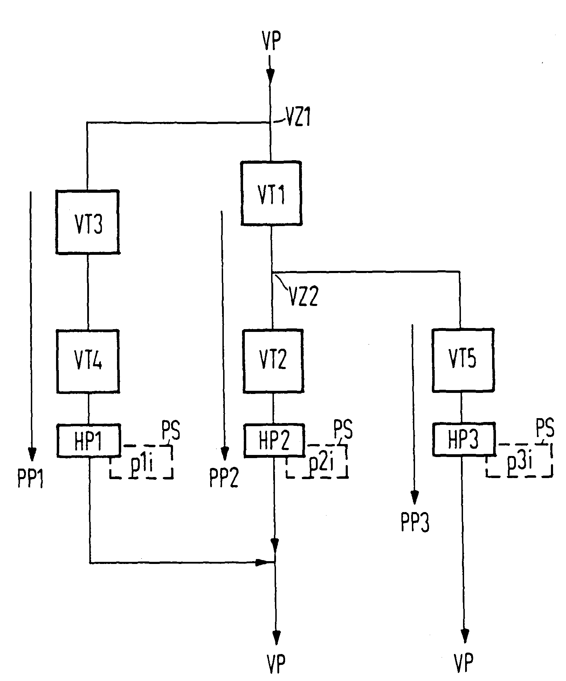

Die FIGUR zeigt einen beispielhaft ausgewählten Ausschnitt eines zentralen vermittlungstechnischen Programms VP eines Kommunikationssystems. Dieser Programmausschnitt enthält fünf vermittlungstechnische Teilprogramme VT1...VT5, wobei für die Erläuterung des erfindungsgemäßen Verfahrens die Funktion der vermittlungstechnischen Teilprogramme VT1...VT5 bedeutungslos ist. Der dargestellte Programmausschnitt enthält eine erste Programmverzweigung VZ1, bei der das vermittlungstechnische Programm in einen ersten Programmpfad PP1 und einen zweiten Programmpfad PP2 verzweigt. Der zweite Programmpfad PP2 ist durch ein erstes vermittlungstechnisches Teilprogramm VT1 und nachfolgend durch ein zweites vermittlungstechnisches Teilprogramm VT2 sowie durch einen zweiten Haltepunkt HP2 gebildet. Der erste Programmpfad PP1 weist aufeinanderfolgend ein drittes vermittlungstechnisches Teilprogramm VT3, ein viertes vermittlungstechnisches Teilprogramm VT4 sowie einen ersten Haltepunkt HP1 auf. Innerhalb des zweiten Programmpfades PP2 ist nach dem ersten vermittlungstechnischen Teilprogramm VT1 ein weiterer Programmverzweigungspunkt VZ2 angeordnet. An diesem Programmverzweigungspunkt VZ2 ist ein dritter Programmpfad PP3 abgeleitet. Dieser enthält ein fünftes vermittlungstechnisches Teilprogramm VT5 sowie nachfolgend einen Haltepunkt HP3. Nach dem ersten und zweiten Haltepunkt HP1, HP2 sind der erste Programmpfad PP1 und der zweite Programmpfad PP2 zu einem einzigen Programmpfad zusammengeführt, der an weitere, nicht dargestellte Teilprogramme, des vermittlungstechnischen Programms VP weitergeleitet wird. Der dritte Programmpfad PP3 ist nach dem dritten Haltepunkt HP3 ebenfalls an weitere, nicht dargestellte, Verzweigungen oder vermittlungstechnische Teilprogramme des vermittlungstechnischen Programms VP gesteuert.

Bei der schrittweisen Ablaufprotokollierung des vermittlungstechnischen Programmes VP - in der Fachwelt mit "Tracen" bezeichnet - wird an den drei Haltepunkten HP1...HP3 der Programmablauf angehalten und die in einem Protokollspeicher PS enthaltenen Informationen protokolliert, d. h. in einem weiteren Speicher hinterlegt oder an einer Ausgabeeinrichtung einer Ablaufprotokolleinrichtung ausgegeben. Erfindungswesentlich ist hierbei, daß für jeden der drei Programmpfade PP1...PP3 ein Haltepunkt HP1...HP3 vorgesehen ist. In den Protokollspeichern PS1...PS3 sind neben den üblichen Fehlerklasseninformationen und Fehlernummern programmpfadindividuelle Haltepunktinformationen p1i...p3i hinterlegt. Gemäß dem dargestellten Ausführungsbeispiel sind die programmpfadindividuellen Haltepunktinformationen p1i...p3i durch die numerischen Informationen 1...3 bestimmt. Sind die drei dargestellten Programmpfade PP1...PP3 beispielsweise einem übergeordneten Programmpfad A zugeordnet, so kann diese Zuordnung beispielsweise durch eine alphanumerische Informationen A1...A3 angegeben werden. Insbesondere bei in der Testphase auftretenden Fehlern in den vermittlungstechnischen Teilprogrammen VT1...VT5 wird die nach der Ablaufprotokollierung durchzuführende Fehlerlokalisierung und Fehlerdiagnose erheblich vereinfacht bzw. verbessert, da eine eindeutige Zuordnung der auftretenden Fehler zum Programmpfad PP1...PP3, in dem der Fehler auftritt, möglich ist.

## Patentansprüche

1. Verfahren zum Lokalisieren von Programmpfaden beim Testen eines zustands- bzw. anreizverarbeitungsorientierten, vermittlungstechnischen Programmes in einem Kommunikationssystem, wobei bei einem in einem Testprogramm angegebenen Haltepunkt der zu testende Programmablauf zumindest temporär unterbrochen wird und die in einem Protokollspeicher enthaltenen Informationen, u.a. Fehlerinformationen, protokolliert werden,
**dadurch gekennzeichnet,**
daß mit Hilfe des Testprogramms in jedem Programmablaufpfad (PP1...PP3) des vermittlungstechnischen Programms (VP) ein Haltepunkt (HP1...HP3) vorgesehen ist, daß jedem Haltepunkt (HP1...HP3) eine eindeutige programmpfadindividuelle Haltepunktinformation (p1i...p3i) zugeordnet wird und daß bei jedem durch einen Haltepunkt (HP1...HP3) beeinflußten Unterbrechen des vermittlungstechnischen Programms (VP) zusätzlich diese jeweilige programmpfadindividuelle Haltepunktinformation (p1i...p3i) protokolliert wird.

2. Verfahren nach Anspruch 1,
**dadurch gekennzeichnet,**
daß in jedem Programmpfad (PP1...PP3) in vorzugsweise zentralen vermittlungstechnischen Programmen (VP) eines Kommunikationssystems ein Haltepunkt (HP1...HP3), dem jeweils eine programmablaufindividuelle Haltepunktinformation (p1i...p3i) zugeordnet ist, vorgesehen ist.

3. Verfahren nach Anspruch 1 oder 2,
**dadurch gekennzeichnet,**
daß die programmpfadindividuelle Haltepunktinformation (p1i... p3i) durch eine numerische und/oder alphanumerische Information gebildet ist.

## Claims

1. Method for tracing program paths when testing a state or stimulus-processing-oriented switching program in a communications system, the program run to be tested being at least temporarily interrupted at a stop point specified in a test program, and the information, inter alia fault information, contained in a record memory being recorded,
characterized in that a stop point (HP1...HP3) is provided with the aid of the test program in each program run path (PP1...PP3) of the switching program (VP), in that a unique program-path-specific stop point information item (p1i...p3i) is assigned to each stop point (HP1...HP3), and in that whenever an interruption in the switching program (VP) occurs which is influenced by a stop point (HP1...HP3), this respective program-path-specific stop point information item (p1i...p3i) is additionally recorded.

2. Method according to Claim 1,
characterized
in that a stop point (HP1...HP3), to which in each case one program-path-specific stop point information item (p1i...p3i) is assigned, is provided in each program path (PP1...PP3) in preferably central switching programs (VP) of a communications system.

3. Method according to Claim 1 or 2,
characterized
in that the program-path-specific stop point information item (p1i...p3i) is formed by a numeric and/or alphanumeric information item.

## Revendications

1. Procédé de localisation de chemins de programme lors du test d'un programme de la technique de commutation orienté traitement d'états ou d'excitations dans un système de communication, dans lequel on interrompt, au moins temporairement, en un point d'arrêt, indiqué dans un programme de tests, le déroulement du programme à tester et on consigne les informations contenues dans une mémoire de consignation, entre autres des informations d'erreurs,
caractérisé en ce que
il est prévu à l'aide du programme de tests dans chaque chemin de déroulement (PP1 à PP3) du programme (VP) de la technique de commutation un point (HP1 à HP3) d'arrêt, on associe à chaque point (HP1 à HP3) d'arrêt une information (p1i à p3i) de point d'arrêt univoque propre à chaque chemin de programme et on consigne, à chaque interruption du programme (VP) de la technique de commutation, provoquée par un point (HP1 à HP3) d'arrêt, en supplément cette information (p1i à p3i) de point d'arrêt propre à chaque chemin de programme.

2. Procédé suivant la revendication 1,
caractérisé en ce que
il est prévu dans chaque chemin de programme (PP1 à PP3), dans des programmes (VP) de la technique de commutation de préférence centraux d'un système de communication un point (HP1 à HP3) d'arrêt, auquel il est associé respectivement une information (p1i à p3i) de point d'arrêt propre au déroulement du programme.

3. Procédé suivant la revendication 1 ou 2,
caractérisé en ce que
l'information (p1i à p3i) de point d'arrêt propre au chemin du programme est formée d'une information numérique et/ou alphanumérique.
